# NEUE EUROPÄISCHE PATENTSCHRIFT

(11) **EP 1 897 672 B2**
(45) Veröffentlichungstag und Bekanntmachung des Hinweises auf die Entscheidung über den Einspruch: **20.07.2022**
(45) Hinweis auf die Patenterteilung: 01.07.2009
(21) Anmeldenummer: 07017388.5
(22) Anmeldetag: 05.09.2007
(51) Int. Cl.: B29C 47/12, B29C 49/04, B29C 47/04, B29C 47/92

(54) **Verfahren und Vorrichtung zur Herstellung von bandförmigen Kunststoffvorformlingen**
Method and device for manufacturing tape-like plastic preforms
Procédé et dispositif destinés à la fabrication de préformes en matière plastique en forme de bande

(30) Priorität: 05.09.2006 DE 102006042065
(43) Veröffentlichungstag der Anmeldung: 12.03.2008
(73) Patentinhaber: Kautex Textron GmbH & Co. KG, 53229 Bonn (DE)
(72) Erfinder: Neumann, Jörg, 53842 Troisdorf (DE); Rost, Uwe, 53842 Troisdorf (DE)
(74) Vertreter: Richly & Ritschel Patentanwälte PartG mbB

(56) Entgegenhaltungen:
- EP-A- 1 334 817
- DE-A1- 3 117 179
- DE-A1- 4 306 045
- DE-U1-202006 013 751
- JP-A- H0 671 644
- JP-A- 55 101 415
- US-A1- 2006 141 184
- hrsg von F Hensen et al: Handbuch der Kunststoff Extrusionstechnik. Band I Grundlagen, 1989, pages 455-456, München Wien
- hrs von E Steinmetz: "Emissionen aus Kraftstoffsystemen von PKWs Gesetzgebung - Systemkomponenten - Entwicklungstrends", Haus der Technik Fachbuch Band 15, 2002, Renningen

## Beschreibung

Die Erfindung betrifft ein Verfahren und eine Vorrichtung zum Herstellen von bandförmigen Kunststoffvorformlingen aus einem schlauchförmigen Vorformling. Derartige bandförmige Vorformlinge können dann entsprechend dem Verwendungszweck individuell weiterverarbeitet werden.

Aus der DE 102 31 866 A1 bzw. der US 2006/0141184 A1 ist ein mehrstufiges Verfahren und eine Vorrichtung zur Herstellung von Hohlkörpern aus Kunststoffhalbschalen bekannt. Hierfür wird ein schlauchförmig aus einer Extrusionsvorrichtung austretender Kunststoffvorformling mittels einer Schneidvorrichtung zerteilt. Die Schneidvorrichtung hat einen dreieckigen Querschnitt und ist senkrecht zur Extrusionsrichtung angeordnet. In unmittelbarer Nähe der Schneidvorrichtung sind zwei angetriebene Antriebswalzen angeordnet, die auf die Plattenhalbzeuge eine Zugkraft ausüben. Aus den Plattenhalbzeugen werden anschließend zwei Halbschalen geformt, die entlang eines umlaufenden Randes miteinander verbunden werden, um den Hohlkörper zu bilden.

Eine ähnliche Vorrichtung ist aus der JP 61261021 bekannt.

Aus der US 2001/015513 A1 ist ein weiteres Verfahren zur Herstellung von Hohlkörpern, insbesondere für Kunststofftanks, aus einem extrudierten schlauchförmigen Vorformling bekannt. Hierfür wird der schlauchförmige Vorformling nach dem Austritt aus dem Extrusionskopf mittels eines Messers in zwei Bänder zerteilt. Die Bänder werden mittels Rollen zu einem Formwerkzeug gefördert. Zwischen die beiden Bänder wird eine Düse positioniert, über die Luft in das Werkzeug eingeblasen wird. Auf diese Weise wird der Kunststoffhohlkörper geformt.

Aus der DE 24 29 008 ist ein Verfahren und eine Düse zum Herstellen von Folienbahnen bekannt. In die Düse als Strang eintretende Schmelze wird aufgeschnitten, zu zwei zueinander parallelen Geraden aufgeschlagen, wobei die Schmelze die Düse in Form zweier Folien verläßt, die anschließend zu einer Folienbahn zusammengeführt werden.

Die WO 99/51418 offenbart ein weiteres Verfahren und eine Vorrichtung zur Herstellung einer Kunststoffolie. Es ist ein Extruder mit einem konischen Rotor und einem hierin einliegenden konischen Stator vorgesehen. Ausgangsseitig hat der Extruder einen flachen Schlitz, aus dem die flache Kunststoffolie austritt.

Aus der DE 103 55 818 A1 ist eine. Extrusionsdüse mit Wanddickensteuerung, bekannt. Hierfür sind ein oder mehrere Schieber in das Düsenmundstück eingebaut, das mittels eines Halterings am Gehäuse des Preßkopfes befestigt ist.

Aus der EP 1 661 687 A1 ist ein Extrusionskopf zur Herstellung eines schlauchförmigen Vorformlings bekannt, der einen schwenkbaren Düsenkopf zur Spalteinstellung aufweist.

Aus der EP 1 334 817 A1 ist ein Verfahren zum Herstellen von schalenförmigen Formteilen aus thermoplastischem Kunststoff bekannt. Hierfür wird in einem Extrusionskopf ein schlauchförmiger Vorformling extrudiert. Der schlauchförmige Vorformling wird unterhalb oder innerhalb des Extrusionskopfes mittels eines Trennwerkzeuges aufgeteilt. Der aus dem Extrusionskopf austretende ringabschnittsförmige Vorformling wird unterhalb des Extrusionskopfes von einem Manipulator ergriffen und quer zur Extrusionsrichtung ausgebreitet. Der Manipulator hat mehrere mit Vakuumöffnungen versehene Segmente, die an die Oberfläche des ringförmigen Vorformlings angelegt werden. Dabei wird ein Vakuum wirksam, so daß der Vorformling an den Segmenten haftet und gestreckt werden kann.

Aus der JP 55101415 ist ein Extrusionskopf zur Herstellung eines schlauchförmigen Vorformlings bekannt. An einer Unterseite des Extrusionskopfes ist eine Schneide befestigt, die den schlauchförmigen Vorformling beim Austritt aus dem Extrusionskopf aufteilt. Der aus dem Extrusionskopf austretende Vorformling wird zu einem Band geformt, welches dann sofort zwischen die Rahmen eines Blaswerkzeuges gehalten wird. Durch Einblasen von Luft zwischen die Rahmen wird eine konvexe Form erzeugt. Aus der DE 31 17 179 A1 ist ein Formwerkzeug bekannt, das mehrere Kanäle aufweist, die jeweils eine ringabschnittförmige Eintrittsöffnung und eine längliche Austrittsöffnung haben.

Der vorliegenden Erfindung liegt die Aufgabe zugrunde, ein Formwerkzeug und eine entsprechende Formvorrichtung zur Herstellung von bandförmigen Kunststoffvorformlingen vorzuschlagen. Das Formwerkzeug und die Formvorrichtung können in einem Verfahren zur Herstellung von bandförmigen Kunststoffvorformlingen eingesetzt werden, welches ein günstiges Verformungs- und Fließverhalten gewährleistet und eine homogene Schichtverteilung über der Breite der Vorformlinge ermöglicht.

Die Lösung besteht in einem Formwerkzeug zur Herstellung von bandförmigen Kunststoffvorformlingen, umfassend mehrere Kanäle, die jeweils eine ringabschnittsförmige Eintrittsöffnung und eine längliche Austrittsöffnung haben, wobei die ringabschnittsförmigen Eintrittsöffnungen denselben Radius aufweisen und über den Umfang verteilt angeordnet und durch radial verlaufende Schneiden voneinander getrennt sind, wobei ein Adapterelement vorgesehen ist, dass eine Eintrittsöffnung aufweist, die mit der ringförmigen Austrittsöffnung eines vorgeschalteten Extrusionskopfs übereinstimmt, und eine mit den ringabschnittsförmigen Eintrittsöffnungen des Formwerkzeugs übereinstimmende Austrittsöffnung aufweist, wobei ein Innenteil und ein Außenteil vorgesehen sind, wobei die Kanäle jeweils zwischen einer Außenfläche des Innenteils und einer gegenüberliegenden Innenfläche des Außenteils gebildet sind und wobei die Innenfläche des Außenteils und die Außenfläche des Innenteils derart gestaltet sind, dass die Fließwege der Kunststoffteilchen eines Querschnitts von der Eintrittsöffnung bis zur Austrittsöffnung etwa gleich lang sind.

Der Vorteil des mit dem erfindungsgemäßen Formwerkzeugs durchführbaren Verfahrens besteht darin, daß die hergestellten band- oder plattenförmigen Vorformlinge eine homogene und gleichmäßige Schichtverteilung aufweisen. Dies ist für die Weiterverarbeitung zu einem Endprodukt, beispielsweise einem Kunststofftank für ein Kraftfahrzeug besonders wichtig. Durch die Formgebung innerhalb des Formwerkzeugs ist der Vorformling noch im schmelzeheißen Zustand, so daß ein günstiges Verformungs- und Fließverhalten gewährleistet ist, was letzten Endes zu gleichmäßigen Werkstoffeigenschaften über der Breite der Vorformlinge führt. Unter Vorformling wird in diesem Zusammenhang ein aus einer Extrusions- bzw. Coextrusionsanlage extrudierter, schmelzeheißer Kunststoffrohling aus einer oder mehreren Kunststoffschichten verstanden. Der Vorformling ist anfangs im Querschnitt betrachtet kreisringförmig, das heißt unendlich. Durch das Teilen des unendlichen schlauchförmigen Vorformlings werden mehrere im Querschnitt betrachtet endliche schalenförmige Vorformlinge gebildet, die jeweils einen ringabschnittsförmigen Querschnitt mit untereinander gleichem Radius aufweisen. Die schalenförmigen Vorformlinge werden beim Durchströmen der Kanäle des Formwerkzeugs zu bandförmigen Vorformlingen geformt, die beim Verlassen des Formwerkzeugs im Querschnitt betrachtet gestreckt, insbesondere gerade sind. Die so gebildeten Kunststoffbänder sind vorzugsweise eben und haben eine größere Dicke als Folie, insbesondere größer als 1 mm. Die Kunststoffbänder oder -platten können für spezielle Anwendungen aber auch leicht gekrümmt sein. Die ebenen Kunststoffbänder lassen sich im Anschluß an den Formgebungsprozeß einfach weiterverarbeiten.

Als weiterer Verfahrensschritt nach dem Formen kann vorgesehen sein: Variieren der Dicke zumindest eines der bandförmigen Vorformlinge über dessen Länge mittels einer Wanddickenregelvorrichtung. Die Dickenregelung des bandförmigen Vorformlings hat den Vorteil, daß je nach Bedarf für das herzustellende Endprodukt Wandbereiche größerer Dicke, die beispielsweise einer höheren Belastung ausgesetzt sind, und Wandbereiche geringerer Dicke, die keine besonderen Anforderungen an die Festigkeit erfüllen müssen, realisiert werden können. Insgesamt kann das Endprodukt somit so leicht wie möglich gestaltet werden, ohne Einbußen auf der Festigkeitsseite hinnehmen zu müssen. Es ist vorgesehen, daß das Variieren der Dicke durch Verschieben eines Stellelements quer zur Strömungsrichtung des Vorformlings bewerkstelligt wird. Dabei können ein oder mehrere Stellelemente über die Länge des Austrittspalts vorgesehen sein, so daß auch punktuell Bereiche größerer Wanddicke erzeugt werden können.

Als weiterer Verfahrensschritt nach dem Formen kann vorgesehen sein: Tiefziehen zumindest eines der bandförmigen Vorformlinge mittels einer Tiefziehvorrichtung. Dabei wirkt sich der bandförmig extrudierte Vorformling insofern positiv auf den Tiefziehvorgang aus, als das tiefgezogene Endprodukt eine gleichmäßige Schichtverteilung aufweist, was einen günstigen Einfluß auf die Festigkeit hat. Der Verfahrensschritt des Tiefziehens kann aus der Vorformwärme erfolgen. Dies ist besonders günstig, weil auf eine zusätzliche Wärmequelle verzichtet werden kann, so daß Energie eingespart wird. Vor dem Tiefziehen werden die bandförmigen Vorformlinge mittels eines herkömmlichen Schneidwerkzeugs in einzelne Platten getrennt.

Alternativ oder in Ergänzung zum Tiefziehen kann auch als weiterer Verfahrensschritt nach dem Formen vorgesehen sein:
Glätten zumindest eines der bandförmigen Vorformlinge mittels einer Glättvorrichtung. Auch hier gilt, daß das Halbzeug nach dem Glätten eine besonders gute Schichtverteilung aufweist, was sich günstig auf die Festigkeit des herzustellenden Endprodukts auswirkt. Prinzipiell ist es auch denkbar, einen der hergestellten bandförmigen Vorformlinge einem Tiefziehvorgang zuzuführen und einen weiteren der bandförmigen Vorformlinge in einer Glättvorrichtung weiterzubearbeiten. Andere Verfahrensschritte nach dem Austritt der bandförmigen Vorformlinge aus der Formvorrichtung sind nicht ausgeschlossen, beispielsweise das Aufbringen von Farbmarkierungen für eine Kontrolle der Wanddicken.

Als ein Verfahrensschritt vor dem Formen kann vorgesehen sein: Anpassen des Durchmessers des schlauchförmigen Kunststoffvorformlings mittels eines Adapterelements, das dem Formwerkzeug vorgeschaltet ist. Der Schritt des Anpassens kann sowohl eine Aufweitung als auch eine Reduktion des Durchmessers des schlauchförmigen Vorformlings bedeuten. Das Adapterelement dient dazu, den aus dem Extrusionskopf austretenden schlauchförmigen Vorformling auf den Eintrittsdurchmesser des Formwerkzeugs zu bringen, der erforderlich ist, um eine gewünschte Endbreite der bandförmigen Vorformlinge zu erreichen. Vorzugsweise entspricht die Bogenlänge des schalenförmigen Vorformlings vor dem Formvorgang etwa der Breite des bandförmigen Vorformlings nach dem Formvorgang.

Das erfindungsgemäße Formwerkzeug bietet dieselben Vorteile, wie das obengenannte Verfahren. Insbesondere haben die mit dem erfindungsgemäßen Formwerkzeug hergestellten bandförmigen Vorformlinge eine homogene und gleichmäßige Schichtverteilung, was sich günstig auf die Werkstoffeigenschaften des herzustellenden Endprodukts auswirkt. Die Anzahl der in dem Formwerkzeug gebildeten Kanäle und damit der erzeugten bandförmigen Vorformlinge beträgt vorzugsweise zwei, wobei auch mehr als zwei über den Umfang verteilte Kanäle denkbar sind, z. B. drei oder vier. Die Kanäle sind vorzugsweise untereinander gleich gestaltet, damit auch ein gleiches Fließ- und Formverhalten der unterschiedlichen Vorformlinge gewährleistet ist. Die Austrittsöffnungen der Kanäle haben eine Mindestbreite von einem Millimeter. Damit lassen sich mit der erfindungsgemäßen Vorrichtung Kunststoffplatten herstellen.

Nach einer bevorzugten Ausgestaltung laufen die zwischen den ringabschnittförmigen Eintrittsöffnungen angeordneten Schneiden im Zylinderschnitt betrachtet von der Eintrittsöffnung zur Austrittsöffnung auseinander. Das heißt, die Schneidkanten bilden die seitlichen Enden der Schlitzkanäle bzw. begrenzen diese. Vorzugsweise sind die Kanäle ausgangsseitig, im Querschnitt durch die Vorrichtung betrachtet, gerade. Dies ist für eine Weiterverarbeitung besonders günstig. Für einen gleichförmigen Fließverlauf der Vorformlinge über der Länge ist es günstig, wenn, sofern zwei Kanäle vorgesehen sind, der Radius der ringabschnittsförmigen Eintrittsöffnung größer ist als der halbe Abstand zwischen den zwei einander gegenüberliegenden Austrittsöffnungen.

Das Formwerkzeug umfaßt ein Innenteil und ein Außenteil, wobei die Kanäle jeweils zwischen einer Außenfläche des Innenteils und einer gegenüberliegenden Innenfläche des Außenteils gebildet sind. Es ist für ein gleichmäßiges Fließverhalten des Vorformlings besonders günstig, wenn die Innenfläche des Außenteils und die Außenfläche des Innenteils derart gestaltet sind, daß sich die dazwischen gebildeten Kanäle in Fließrichtung des Vorformlings verjüngen. Die Innenfläche des Außenteils und die Außenfläche des Innenteils sind derart gestaltet, daß sie zueinander komplementär ausgebildet sind.

Die den Kanal bildende Außenfläche und Innenfläche sind jeweils so geformt, daß die Längen der Stromlinien des Vorformlings innerhalb eines Querschnitts zwischen kreisringförmiger Eintrittsöffnung und länglicher Austrittsöffnung in etwa gleich lang sind. Das heißt, idealer Weise ist der Kanal so gestaltet, daß die Strömungsgeschwindigkeit des Vorformlings über den Querschnitt des jeweiligen Kanals näherungsweise konstant ist. Hierdurch wird ein besonders günstiges Fließverhalten beim Durchströmen des Vorformlings durch das Formwerkzeug und damit eine gleichmäßige Schichtverteilung erreicht. Unterschiedliche Längen der Stromlinien können durch entsprechendes Anpassen der Kanaldicke angeglichen werden. In Konkretisierung weisen die einander gegenüberliegende Außenfläche und die Innenfläche eines Kanals jeweils zumindest eine ebene Teilfläche auf, die auch leicht gewölbt sein kann. Diese ist etwa in Form eines gleichschenkligen Dreiecks gestaltet, wobei der Scheitelpunkt des Dreiecks in der Mitte der die ringabschnittförmige Einlaßöffnung begrenzenden Kante liegt und die dem Scheitelpunkt gegenüberliegende Seite des Dreiecks die Kante der länglichen Austrittsöffnung bildet. Seitlich benachbart zu der ebenen Dreiecksfläche schließen zwei gewölbte Teilflächen an, die zueinander spiegelsymmetrisch sind. Dabei sind zwischen den Seitenkanten der ebenen Fläche und den gewölbten Teilflächen Übergangsflächen mit verhältnismäßig kleinen Radien gebildet. Die Wandlungen des Innenteils und des Außenteils können aber auch als Freiformflächen gebildet sein.

Nach einer bevorzugten Ausgestaltung ist das Außenteil aus zwei Halbelementen zusammengesetzt, die nachträglich miteinander verbunden sind. Dasselbe gilt vorzugsweise auch für das Innenteil, das aber auch einteilig gestaltet sein kann. Durch die zweiteilige Gestaltung lassen sich insbesondere auch große Formwerkzeuge mit vertretbarem Aufwand herstellen. Vorzugsweise hat das Innenteil bzw. dessen Halbelemente zwei nach außen abstehende Ansätze zum Ausrichten und Verbinden mit den Halbelementen des Außenteils. Auf diese Weise wird eine exakte Positionierung der Halbelemente zueinander ermöglicht, so daß auch die Kanäle korrekt gebildet sind. Zum Verbinden der einzelnen Bauteile kommen übliche Mittel in Frage, beispielsweise Schraubverbindungen.

Nach einer bevorzugten Weiterbildung ist dem Formwerkzeug ein Extrusionskopf dem Erzeugen eines schlauchförmigen Kuststoffvorformlings vorgeschaltet. Als Extrusionskopf kann sowohl ein kontinuierlich bzw. stetig arbeitender als auch ein diskontinuierlich bzw. hubweise arbeitender Extrusionskopf zum Einsatz kommen.

Zwischen dem Extrusionskopf und dem Formwerkzeug ist ein Adapterelement angeordnet, das eine mit der kreisringförmigen Austrittsöffnung des Extrusionskopfes übereinstimmende Eintrittsöffnung und eine mit den ringabschnittsförmigen Eintrittsöffnungen des Formwerkzeugs übereinstimmende Austrittsöffnung aufweist. Das Adapterelement dient zum Anpassen des Durchmessers des schlauchförmigen Vorformlings an die zu erzeugende Breite der bandförmigen Vorformlinge.

Nach einer bevorzugten Ausgestaltung ist eine Wanddickenregelvorrichtung zur Regelung der Dicke zumindest eines der bandförmigen Vorformlinge vorgesehen, die mit dem Formwerkzeug verbunden ist und zumindest einen an eine der länglichen Austrittsöffnungen des Formwerkzeugs anschließenden Schlitzkanal aufweist, der in einen länglichen Austrittsspalt mündet. Die Wanddickenregelvorrichtung bietet den Vorteil, daß Kunststoffbänder mit partiellen Wandbereichen größerer Dicke und Wandbereiche geringerer Dicke hergestellt werden können. Auf diese Weise können besondere Gegebenheiten beim zu fertigenden Endprodukt bereits beim Herstellen des Vorformlings berücksichtigt werden, was sich insgesamt positiv auf die Festigkeit und Steifigkeit bei gleichzeitig geringem Gewicht auswirkt. Es ist vorgesehen, daß die Wanddicke über die gesamte Breite des bandförmigen Vorformlings verändert wird, das heißt ein wellenförmiges Profil über der Länge erzeugt werden kann, oder daß die Wanddicke punktuell an definierten Stellen über der Breite des bandförmigen Vorformlings verändert werden kann, das heißt einzelne Vorsprünge erzeugt werden.

In Konkretisierung umfaßt die Wanddickenregelvorrichtung zumindest ein Stellelement, das den Austrittsspalt seitlich begrenzt und quer zur Strömungsrichtung des Vorformlings verstellbar ist. Das Stellelement kann in Form eines Balkens gestaltet sein, der sich über die gesamte Länge des Austrittsspalts erstreckt, wobei über dessen Länge mehrere Stellantriebe zum Verstellen des Balkens quer zum Austrittspalt vorgesehen sind. Vorzugsweise hat der Balken Endabschnitte, die in Ausnehmungen eines den Austrittspalt begrenzenden Rahmenteils gehalten sind. Auf diese Weise wird gewährleistet, daß eine Verkürzung der Länge des Balkens, die aufgrund von Verbiegungen quer zum Austrittsspalt auftritt, ausgeglichen wird. Eine ungewünschte Spaltbildung zwischen den Enden des Balkens und dem Rahmen bei Veränderung der Wanddicke wird verhindert. Es ist vorgesehen, daß die Wanddicke statisch oder dynamisch verändert werden kann. Bei einer dynamischen Verstellung ist eine Steuereinheit vorzusehen, mit der die Stellantriebe während des Formvorgangs angesteuert werden.

Nach einer bevorzugten Ausgestaltung umfaßt die Wanddickenregelvorrichtung ein Innenteil und ein Außenteil, zwischen denen eine der Anzahl der Austrittsöffnungen des Formwerkzeugs entsprechende Anzahl von Kanälen gebildet sind. Die Spaltbreite der Austrittsspalte der Kanäle ist durch axiale Verstellung des Innenteils relativ zum Außenteil veränderbar. Vorzugsweise umfaßt das Innenteil einen ortsfesten Anschlußkörper und ein hierin aufgenommenen und gegenüber diesem axial verstellbaren Stellkörper, der die Innenflächen der Schlitzkanäle im Bereich der Austrittspalte bildet. Durch Axialverstellung des innenliegenden Stellkörpers werden die Dicken der Ausstrittspalte verändert.

Nach einer möglichen Weiterbildung ist der Formvorrichtung bzw. dem Breitschlitzwerkzeug ein Blaswerkzeug zum Herstellen von Kunststoffhohlkörpern nachgeschaltet. Alternativ hierzu kann auch eine Tiefziehvorrichtung zum Tiefziehen zumindest eines der bandförmigen Vorformlinge vorgesehen sein. Alternativ oder in Ergänzung ist auch eine Glättvorrichtung denkbar, die zum Glätten zumindest eines der bandförmigen Vorformlinge nach dem Austritt aus der Formvorrichtung dient.

Bevorzugte Ausführungsbeispiele werden nachstehend anhand der Zeichnungsfiguren erläutert. Es zeigen
- Figur 1: eine erfindungsgemäße Formvorrichtung im Längsschnitt gemäß Schnittlinie I-I aus Figur 3 mit einem erfindungsgemäßen Formwerkzeug;
- Figur 2: eine erfindungsgemäße Formvorrichtung im Längsschnitt gemäß Schnittlinie II-II aus Figur 3 mit einem erfindungsgemäßen Formwerkzeug;
- Figur 3: das Formwerkzeug aus Figur 1 in Draufsicht als Drahtlinienmodell;
- Figur 4: die Formvorrichtung aus Figur 1 in perspektivischer Explosionsdarstellung;
- Figur 5: das Innenteil des Formwerkzeugs aus Figur 1 in perspektivischer Ansicht;
- Figur 6: das Innenteil des Formwerkzeugs aus Figur 1 in perspektivischer Draufsicht;
- Figur 7: das Außenteil des Formwerkzeugs aus Figur 1 in perspektivischer An-sicht;
- Figur 8: das ein Außenteil und ein Innenteil des Formwerkzeugs aus Figur 1 auseinandergeklappt in perspektivischer Darstellung;
- Figur 9: einen Teilschnitt eines das Formwerkzeug nach Figur 1 durchlaufenden Vorformlings in perspektivischer Ansicht;
- Figur 10: das Formwerkzeug aus Figur 1 mit Wanddickenregelvorrichtung in einer ersten Ausführungsform in Draufsicht als Drahtlinienmodell;
- Figur 11: das Formwerkzeug gemäß Schnittlinie XI-XI aus Figur 10;
- Figur 12: eine Wanddickenregelvorrichtung in einer zweiten Ausführungsform im Teillängsschnitt;
- Figur 13: die Wanddickenregelvorrichtung aus Figur 12 im Teilquerschnitt durch die Stellelemente;
- Figur 14: eine Wanddickenregelvorrichtung in einer dritten Ausführungsform im Teillängsschnitt;
- Figur 15: eine Wanddickenregelvorrichtung in einer vierten Ausführungsform im Teillängsschnitt;
- Figur 16: das Detail XVI aus Figur 15;
- Figur 17: die Formvorrichtung nach Figur 1 (ohne Extrusionskopf) mit nachgeschaltetem Blaswerkzeug in perspektivischer Ansicht;
- Figur 18: die Formvorrichtung nach Figur 1 (ohne Extrusionskopf) mit nachgeschalteten Tiefziehvorrichtungen in perspektivischer Ansicht;
- Figur 19: die Formvorrichtung nach Figur 1 (ohne Extrusionskopf) mit nachgeschalteten Glättvorrichtung in perspektivischer Ansicht;

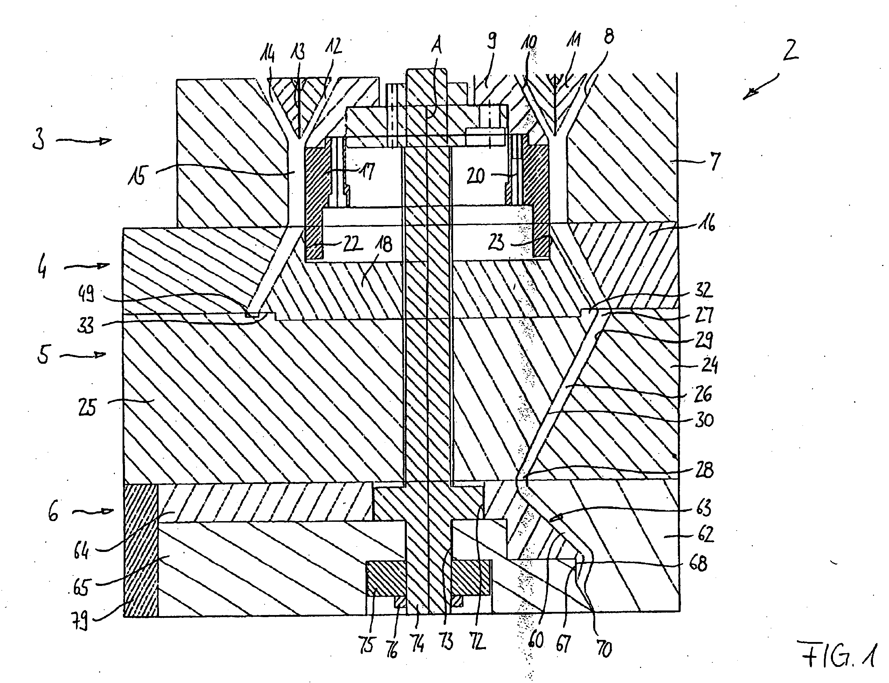

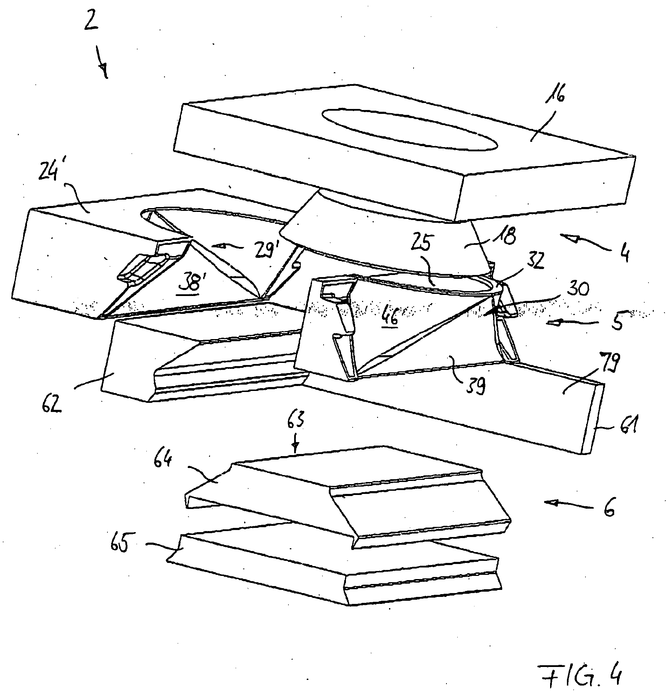

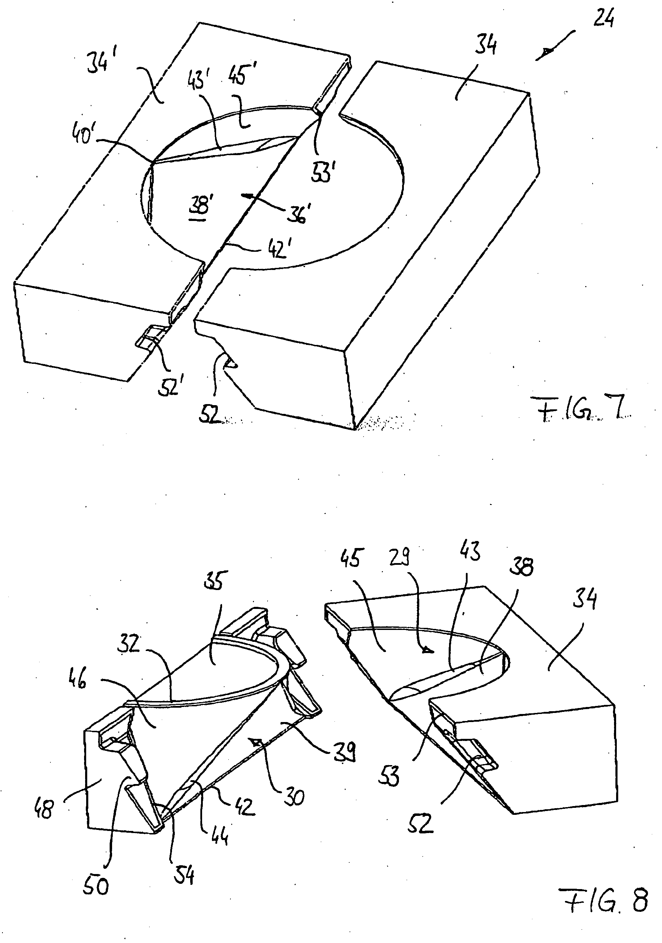

Die Figuren 1 bis 8 werden im folgenden gemeinsam beschrieben. Es ist eine Formvorrichtung 2 zur Herstellung von bandförmigen Vorformlingen aus Kunststoff ersichtlich. Die Formvorrichtung 2 umfaßt einen Extrusionskopf 3, von dem nur das Endstück dargestellt ist, ein Adapterelement 4, ein Formwerkzeug 5 und eine Wanddickenregelvorrichtung 6, die seriell miteinander verbunden sind. Dabei kann die Baueinheit bestehend aus Adapterelement 4, Formwerkzeug 5 und Wanddickenregelvorrichtung 6 auch als Breitschlitzwerkzeug bezeichnet werden.

Der Extrusionskopf 3 weist ein ringförmiges Gehäuse 7 mit einer Innenbohrung 8, eine zentrale Pinole 9 mit einer umlaufenden Außenfläche 10 sowie radial zwischen diesen ein Ringteil 11 auf. Es ist ersichtlich, daß zwischen dem Ringteil 11 und der Pinole 8 ein erster Ringkanal 12 gebildet ist, innerhalb des Ringteils 11 ein zweiter Ringkanal 13 und zwischen dem Ringteil 11 und dem Gehäuse 6 ein dritter Ringkanal 14. Aus allen drei Ringkanälen 12, 13, 14 wird Extrudat in Richtung zur Ringöffnung 15 gepreßt. Dabei laufen die drei Extrudatströme im Mündungsbereich der drei Ringkanäle 12, 13, 14 zusammen, um einen mehrschichtigen Vorformling zu bilden. Bei dem dargestellten Extrusionskopf 3 handelt es sich demnach um eine Coextrusionsanlage.

Unterhalb des Extrusionskopfes 3 ist der Adapter 4 vorgesehen, der ein mit dem Gehäuse 7 verbundenes äußeres Ringteil 16, ein mit der Pinole 9 verbundenes zylindrisches Innenteil 17 und ein relativ zu diesem axial bewegliches kegelstumpfförmiges Innenteil 18 aufweist. Die Verbindung des äußeren Ringteils 16 mit dem Gehäuse 7 sowie des Innenteils 17 mit der Pinole 9 erfolgt mittels Schraubverbindungen, die hier nicht dargestellt sind . Das kegelstumpfförmige Innenteil 18 hat eine zentrale Bohrung 22, in die das zylindrische Innenteil 17 mit seiner zylindrischen Außenfläche 23 eingeschoben ist. Auf diese Weise kann ein Längenausgleich, der sich aufgrund von Fertigungstoleranzen und unterschiedlicher Wärmeausdehnung der Bauteile ergibt, ausgeglichen werden.

Unterhalb des Adapterelements 4 schließt das erfindungsgemäße Formwerkzeug 5 an, das aus einem Außenteil 24 und einem Innenteil 25 zusammengesetzt ist. Die Verbindung erfolgt beispielsweise mittels Schraubverbindungen, die jedoch nicht dargestellt sind. Um das Formwerkzeug 5 relativ zum Adapterelement 4 auf der Längsachse A zu zentrieren, hat das Innenteil 25 auf seiner oberen Stirnfläche einen umlaufenden ringförmigen Vorsprung 32, der in eine entsprechende umlaufende Ausnehmung 33 des kegelstumpfförmigen Innenteils 18 eingreift. Es ist ersichtlich, daß zwischen dem Außenteil 24 und dem Innenteil 25 zwei Kanäle 26, 26' gebildet sind, die jeweils eine ringabschnittsförmige Eintrittsöffnung 27, 27' und eine gerade Austrittsöffnung 28, 28' aufweisen. Dabei sind die Kanäle 26, 26' jeweils zwischen einer Innenfläche 29, 29' des Außenteils 24 und einer gegenüberliegenden Außenfläche 30, 30' des Innenteils 25 gebildet.

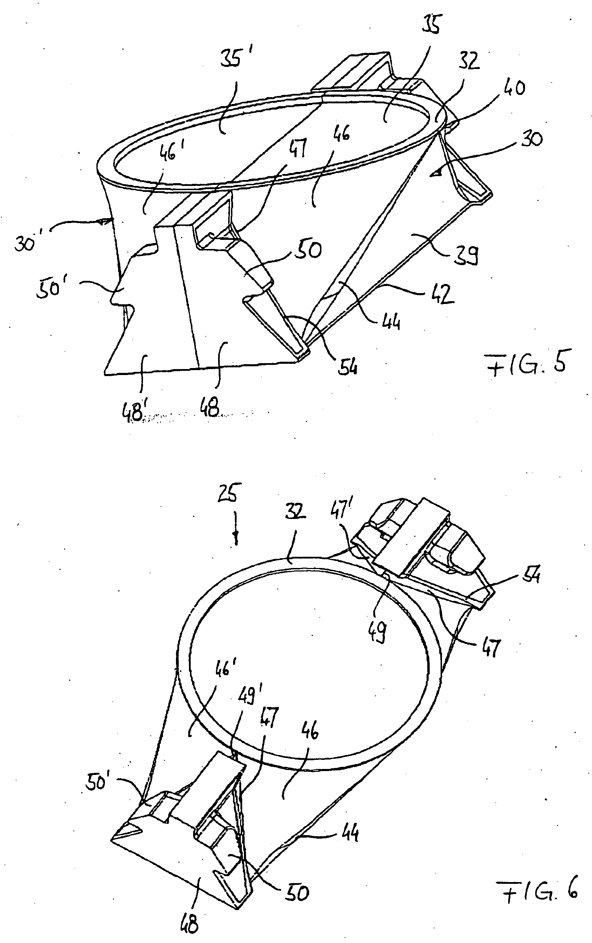

Insbesondere unter Bezugnahme auf die Figuren 5 bis 8 werden im folgenden weitere Besonderheiten des Formwerkzeuges 5 erläutert. Es ist ersichtlich, daß das Außenteil 24 und das Innenteil 25 jeweils zweiteilig gestaltet sind, wobei die beiden Halbelemente 34, 34' des Außenteils 24 und die beiden Halbelemente 35, 35' des Innenteils 25 jeweils untereinander identisch gestaltet sind. Die Trennung des Außenteils 24 und des Innenteils 25 erleichtert die Fertigung von größeren Formwerkzeugen; das Innenteil und das Außenteil können jedoch selbstverständlich auch jeweils einteilig hergestellt werden. Die Teilung des Außenteils und des Innenteils ist so gewählt, daß die Innenfläche 29, 29' des äußeren Halbelements 34, 34' und Außenfläche 30, 30' des inneren Halbelements 35, 35' einander gegenüberliegen und die Seitenwände jeweils eines der Kanäle 26, 26' bilden. Die Außenfläche und die Innenfläche der beiden Kanäle 26, 26' sind jeweils so gestaltet, daß die Längen gedachter Stromlinien zwischen der ringabschnittsförmigen Eintrittsöffnung 27, 27' und der länglichen bzw. geraden Austrittsöffnung 28, 28' in etwa gleich lang sind. Auf diese Weise wird erreicht, daß die Strömungsgeschwindigkeit des Vorformlings über den Querschnitt des Kanals 26, 26' näherungsweise konstant ist, wodurch ein günstiges Fließverhalten und damit eine gleichmäßige Schichtverteilung des Vorformlings gewährleistet wird. Hierfür weisen die einander gegenüberliegende Außenfläche 29, 29' und die Innenfläche 30, 30' eines Kanals 26, 26' jeweils eine ebene Teilfläche 38, 38'; 39, 39' auf. Diese ebene Teilfläche 38, 38'; 39, 39' hat die Form eines gleichschenkligen Dreiecks, dessen Scheitelpunkt 40, 40' in der Mitte der die ringabschnittförmige Einlaßöffnung 27, 27' begrenzenden Kante liegt, wobei die dem Scheitelpunkt gegenüberliegende Seite 42, 42' des Dreiecks die Kante der geraden Austrittsöffnung 28, 28' bildet.

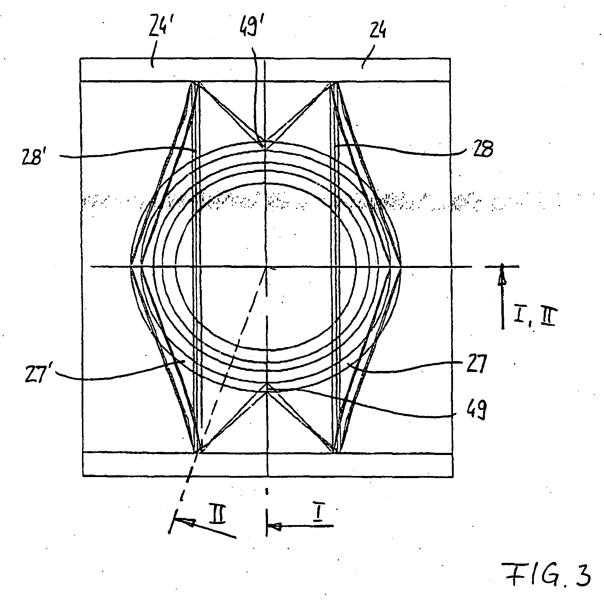

In Umfangsrichtung benachbart zu der ebenen Teilfläche 38, 38'; 39, 39' schließen beidseitig Übergangsflächen 43, 43'; 44, 44' mit relativ kleinen Radien an, welche in gewölbte Teilflächen 45, 45'; 46, 46' übergehen, welche ausschließlich stetige Höhenverläufe aufweisen. Die gewölbten inneren Teilflächen werden jeweils durch eine obere kreisabschnittförmige Kante, welche an den Zentrierring 32 anschließt, die seitliche Übergangsfläche 44, 44' und eine den Kanal 26, 26' in Umfangsrichtung abschließende Endfläche 47, 47' begrenzt. Dabei laufen die Übergangsfläche 44, 44' und die Endfläche 47, 47' nach unten hin zusammen und treffen sich am Ende der geraden Austrittsöffnung 28, 28'. Die beiden gewölbten Teilflächen des Innenteils bzw. des Außenteils sind spiegelsymmetrisch zueinander, so daß die zweite Teilfläche am entgegengesetzten Ende der Austrittsöffnung 28, 28' zusammenlaufen. Es ist insbesondere aus Figur 3 ersichtlich, daß der Radius der kreisringförmigen Eintrittsöffnungen 27, 27' größer ist als der halbe Abstand zwischen den beiden geraden Austrittsöffnungen 28, 28'. Dabei entspricht der Abstand der beiden Austrittsöffnungen 28, 28' vorzugsweise etwa dem Radius der kreisringförmigen Eintrittsöffnung.

Die Endflächen 47, 47' werden durch seitliche Ansätze 48, 48' des Innenteils 25 gebildet, welche radial nach außen abstehen und einteilig mit dem jeweiligen Halbelement 35, 35' gestaltet sind. Die Endflächen 47, 47' zweier in Umfangsrichtung benachbarter Kanäle 26, 26' laufen nach oben hin spitz zusammen, um eine Schneide 49, 49' zu bilden. Die Schneiden 49, 49' trennen somit die beiden ringabschnittförmigen Eintrittsöffnungen 27, 27' der Kanäle 26, 26' voneinander, und dienen dazu, den schlauchförmigen Vorformling in zwei schalenförmige Vorformlinge zu teilen. Nach unten hin sind die seitlichen Endflächen 47, 47' gegenüber der radialen Schneide 49, 49' um 90° verdreht und bilden an der Austrittsöffnung 28, 28' die seitliche Begrenzung des jeweiligen Schlitzkanals, das heißt die Verbindung zwischen der Außenfläche 29, 29' und der hierzu parallelen Innenfläche 30, 30'. Die seitlichen Ansätze 48, 48' des Innenteils 25 haben ferner in Umfangsrichtung vorstehende Nocken 50, 50', die in entsprechend geformte Ausnehmungen 52, 52' des Außenteils 25 eingreifen, um die beiden Bauteile 24, 25 zueinander auszurichten. Zum Abdichten der Kanäle 26, 26' sind am Innenteil 24 und am Außenteil 25 an den Kontaktbereichen Dichtflächen 53, 53'; 54, 54' vorgesehen, die mit besonders hoher Fertigungsgenauigkeit gearbeitet werden und ein flüssigkeitsdichtes Anliegen der Bauteile 24, 25 aneinander zu gewährleisten.

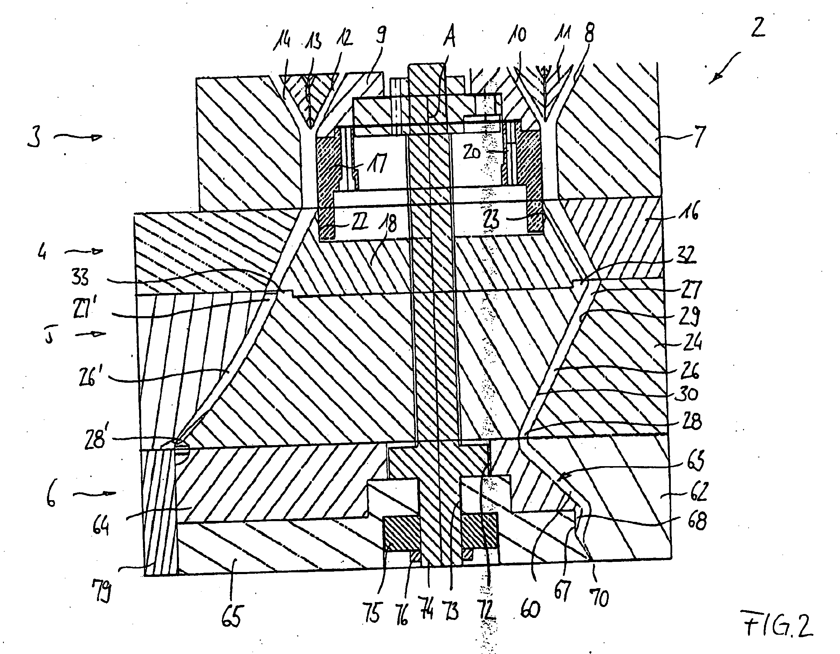

Unterhalb des Formwerkzeugs 5 ist die Wanddickenregelvorrichtung 6 angeordnet, die fest mit dem Formwerkzeug 5 verbunden ist, beispielsweise mittels hier nicht dargestellter Schraubverbindungen. Es ist insbesondere in den Figuren 1 und 2 ersichtlich, daß die Wanddickenregelvorrichtung 6 ein Außenteil 62 umfaßt, das einen umlaufenden, rechteckigen Rahmen 61 bildet, sowie ein zweigeteiltes Innenteil 63, das ähnlich aufgebaut ist wie das Innenteil des Adapterelements 4 und einen ortsfesten oberen Anschlußkörper 64 und einen gegenüber diesem axial beweglichen unteren Stellkörper 65 aufweist, die im Querschnitt betrachtet rechteckige Außenkonturen haben. Zwischen dem Außenteil 62 und dem Innenteil 63 sind längliche bzw. gerade Kanäle 60, 60' gebildet, die sich eingangsseitig mit den Austrittsöffnungen 28, 28' des Formwerkzeuges 5 decken und mit diesen strömungsverbunden sind und ausgangsseitig in Austrittsspalte 70, 70' münden.

Das Anschlußelement 64 ist fest an das darüberliegende Innenteil 25 des Formwerkzeugs angeschlossen und weist eine Ausnehmung 66 mit einander gegenüberliegenden parallelen Seitenwänden 67 auf, in der der Stellkörper 65 mit ebenen äußeren Flächenabschnitten 68 aufgenommen ist. An die ebenen Flächenabschnitte 68 schließen sich jeweils winklige Flächenabschnitte 69 an, die die inneren Seitenwände der geraden Austrittsspalte 70 bilden. Die äußeren Seitenwände der Austrittskanäle werden jeweils durch eine gegenüberliegende Fläche des Außenteils 62 gebildet. Es ist ersichtlich, daß der Anschlußkörper 64 und der Stellkörper 65 jeweils einen zentralen Durchbruch 72, 73 aufweisen, der von einer Zugstange 74 durchdrungen wird. Die Zugstange 74 hat an ihrem unteren Ende ein Gewinde, auf das eine Mutter 75 aufgeschraubt und mittels eines Sicherungsrings 76 gegen ungewolltes Lösen gesichert ist. Durch axiales Senken der Zugstange 74, die mit ihrem oberen Ende üblicherweise auf dem Extrusionskopf 3 höhenverstellbar gehalten wird, wird auch der Stellkörper 65 abgesenkt, so daß sich die beiden Austrittsspalte 70, 70' vergrößern. Auf diese Weise wird die Dicke des bandförmigen Vorformlings bedarfsgerecht eingestellt.

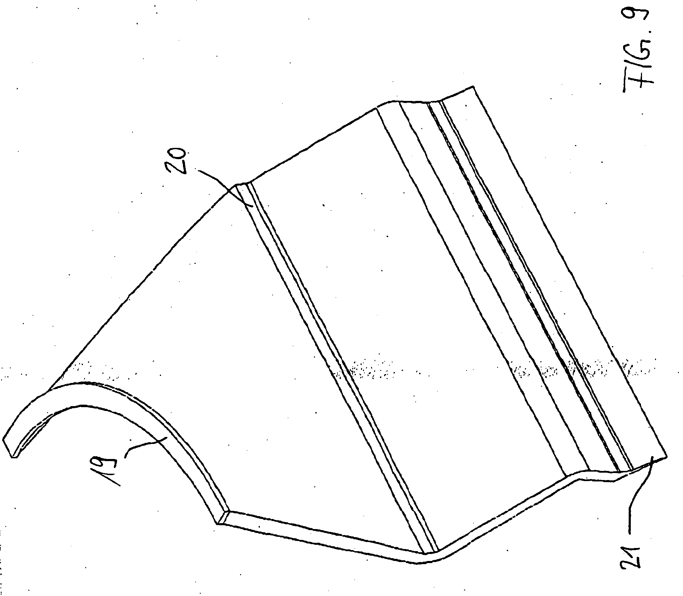

Figur 9 zeigt einen Abschnitt des Vorformlings, wie er zwischen der ringabschnittsförmigen Eintrittsöffnung 27 des Formwerkzeugs 5 und dem Austrittsspalt 70 der Wanddickenregelvorrichtung 6 verhält. Es ist ersichtlich, daß nach dem Teilen des schlauchförmigen Vorformlings mehrere schalenförmige Vorformlinge 19 gebildet werden, die jeweils einen ringabschnittsförmigen Querschnitt mit zwei Enden aufweisen. Der mittlere Radius der schalenförmigen Vorformlinge 19 entspricht dabei dem Radius der Eintrittsöffnungen 27 des Formwerkzeugs. Die schalenförmigen Vorformlinge 19 werden beim Durchströmen des Formwerkzeugs 2 zu bandförmigen Vorformlingen 20 geformt, die beim Verlassen des Formwerkzeugs 2 im Querschnitt betrachtet gerade sind. Nach dem Austreten aus dem Formwerkzeug 2 fließen die bandförmigen Vorformlinge 20 durch die Wanddickenregelvorrichtung 6, wo die Wanddicke der Vorformlinge bedarfsweise verjüngt wird. Am Austrittsspalt 70 tritt der Vorformling 21 aus der Wanddickenregelvorrichtung 6 in die Umgebung aus und kann nun entsprechend weiterverarbeitet werden.

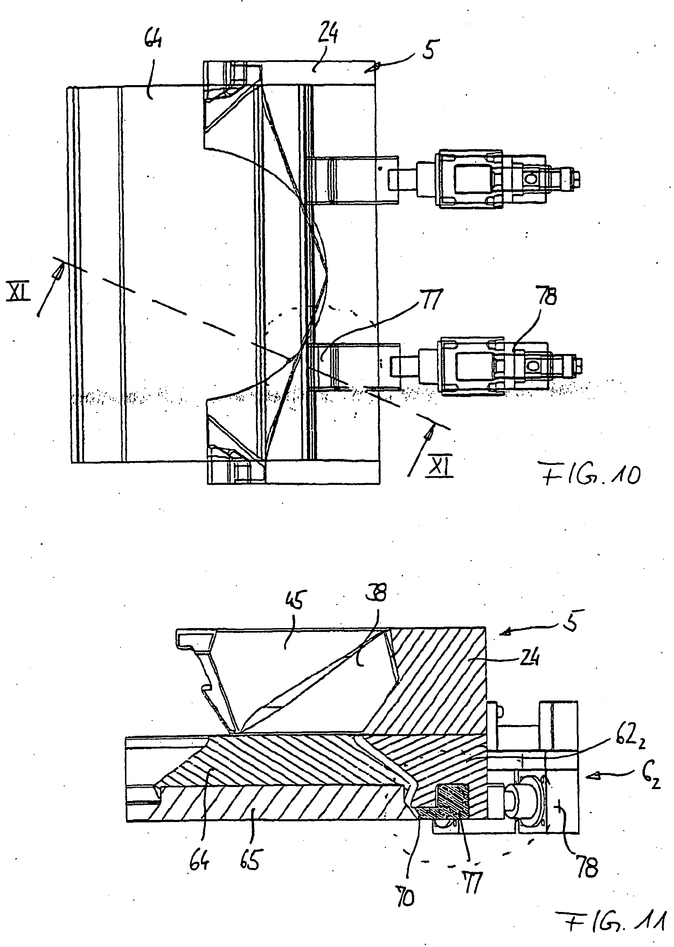

Die Figuren 10 und 11 werden im folgenden gemeinsam beschrieben. Es ist eine Hälfte des Formwerkzeugs aus Figur 1 mit einer Wanddickenregelvorrichtung 6₂ nach einer alternativen Ausführungsform dargestellt. Hinsichtlich der Gemeinsamkeiten wird auf obige Beschreibung verwiesen, wobei gleiche Bauteile mit gleichen und abgewandelte Bauteile mit Bezugszeichen mit um zwei tiefergestellten Indizes versehen sind. Die Besonderheit der vorliegenden Wanddickenregelvorrichtung 6₂ ist, daß im Außenteil 62₂ mehrere Stellelemente 77 in Form von Stellschiebern entlang dem Austrittsspalt 70 angeordnet sind, die jeweils mittels eines individuellen Stellantriebs 78 betätigt werden. Die Stellschieber 77 haben jeweils eine dem Kanal 60 zugewandte Stirnfläche, welche im Längsschnitt der Kontur des Außenteils 62₂ angepaßt ist und eine Seitenfläche des Austrittsspalts 70 bildet. Durch Verschieben der Stellschieber 77 quer zum Austrittsspalt 70 wird dieser verbreitert oder verjüngt, so daß partiell im Bereich der Stellschieber 77 die Wanddicke des austretenden Vorformlings über der Länge bedarfsweise verändert werden kann. Vorliegend sind genau zwei Stellschieber 77 vorgesehen; es kann aber auch eine beliebig andere Anzahl von Stellschiebern zum Einsatz kommen, die entlang des Austrittsspalts 70 angeordnet werden können. Als Stellantriebe 78 sind vorliegend Hydraulikzylinder vorgesehen, die von einem zentralen Steuersystem angesteuert werden können. Insofern handelt es sich hier um eine dynamisch gesteuerte Wanddickenregelvorrichtung.

Selbstverständlich sind auch andere Antriebsmöglichkeiten zum Ansteuern der Stellelemente denkbar, beispielsweise elektromotorische Antriebe.

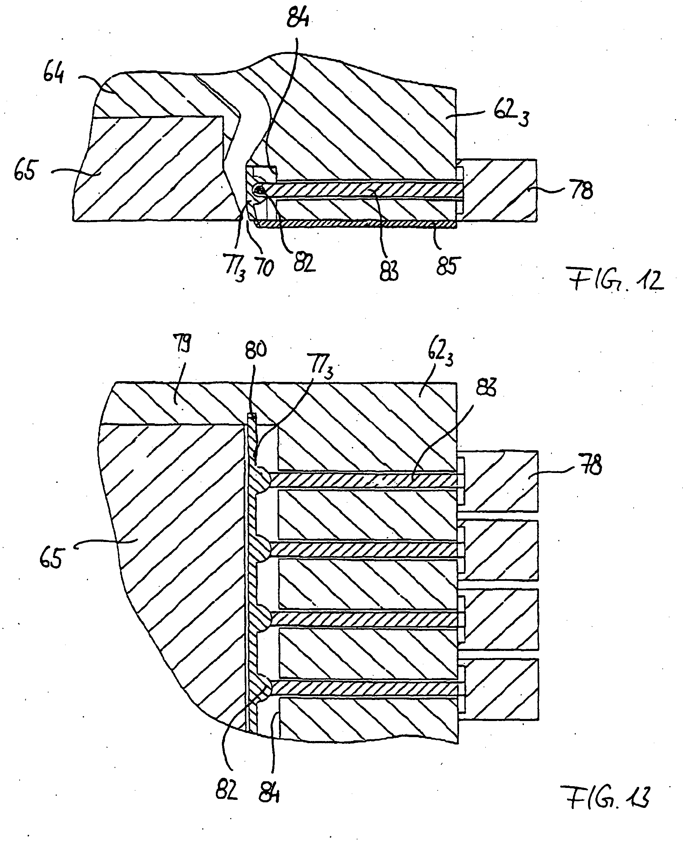

Die Figuren 12 und 13 werden im folgenden gemeinsam beschrieben. Es ist eine Hälfte des Formwerkzeugs aus Figur 1 mit einer Wanddickenregelvorrichtung 6₃ nach einer weiteren Ausführungsform dargestellt. Hinsichtlich der Gemeinsamkeiten wird auf die obige Beschreibung Bezug genommen, wobei gleiche Bauteile mit gleichen und abgewandelte Bauteile mit Bezugszeichen mit um drei tiefergestellten Indizes versehen sind. Die vorliegende Wanddickenregelvorrichtung 6₃ ist dadurch gekennzeichnet, daß das Stellelement 77₃ in Form eines Stellbalkens gestaltet ist, der vorzugsweise aus elastischem Federstahl besteht. Es ist ersichtlich, daß sich der Stellbalken 77₃ über die gesamte Länge des Kanals 60 im Bereich des Austrittsspalts 70 erstreckt. Der Stellbalken 77₃ weist an seiner Rückseite mehrere regelmäßig über der Länge verteilte Anschlußmittel 82 auf, an denen jeweils eine Kolbenstange 83 des zugehörigen Stellantriebs 78 angeschlossen ist. Auf diese Weise läßt sich die Breite des Austrittsspalts 70 partiell über seiner Länge verändern, das heißt je nach Bedarf kann in einem Abschnitt eine größere Wanddicke und in einem hierzu benachbarten Abschnitt des Vorformlings eine kleinere Wanddicke erzeugt werden. Dies ermöglicht eine optimale Anpassung der Kontur des Vorformlings an die Erfordernisse des Halbzeugs bzw. Endprodukts, das aus dem Vorformling hergestellt wird. Die Steuerung erfolgt dabei ebenfalls dynamisch, das heißt die Stellantriebe 78 können individuell von einer zentralen Regeleinheit angesteuert werden, so daß der Stellbalken 77₃ beliebige Konturen annehmen kann. Der Stellbalken 77₃ ist in einer parallel zum Austrittsspalt 70 verlaufenden Ausnehmung 84 des Außenteils 62₃ axial zur Kolbenstange 83 beweglich aufgenommen, wobei die Ausnehmung 84 nach unten hin durch eine Abdeckplatte 85 abgeschlossen ist, die mit dem Außenteil 62₃ beispielsweise mittels Schraubverbindungen fest verbunden ist. In seinem unteren Bereich ist der Stellbalken 77₃, der zwischen der die Ausnehmung 84 nach oben hin abschließenden Wandung und der Abdeckplatte 85 dichtend gehalten ist, nach außen hin leicht abgewinkelt. In den einander gegenüberliegenden seitlichen Rahmenteilen 79 des Außenteils 62 sind Nuten 80 vorgesehen, in die der Stellbalken 77₃ mit seinen Endabschnitten eingreift. Auf diese Weise kann eine durch die Betätigung der Stellantriebe 78 hervorgerufene Verkürzung der 'Länge über alles' des Stellbalkens 77₃ ausgeglichen werden, ohne daß ein ungewünschter Spalt zwischen dem Kanal 60 und der seitlichen Ausnehmung 84 entsteht.

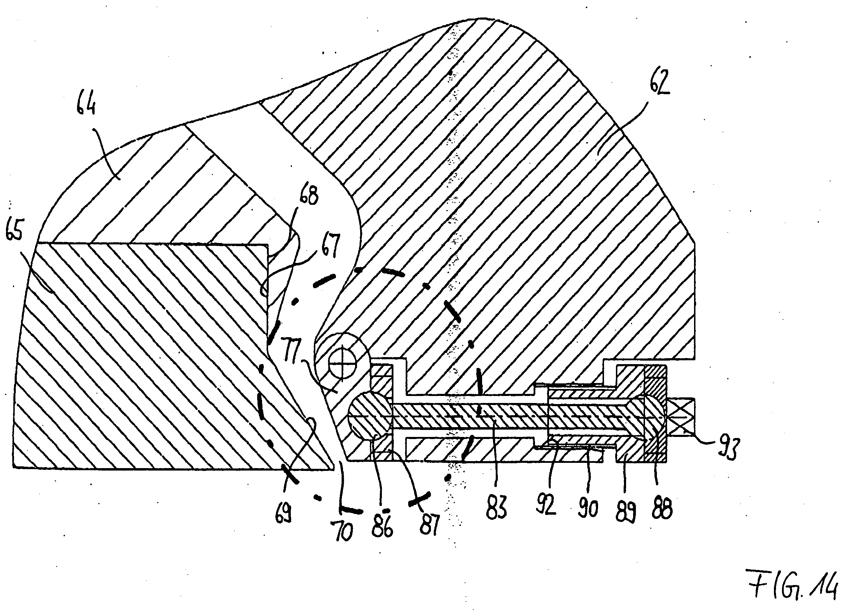

Figur 14 zeigt eine weitere Ausführungsform einer Wanddickenregelvorrichtung 6, die ähnlich aufgebaut ist wie die Ausführungsformen nach den Figuren 12 bzw. 13. Hinsichtlich der Gemeinsamkeiten wird insofern auf die obige Beschreibung Bezug genommen, wobei gleiche Bauteile mit gleichen und abgewandelte Bauteile mit Bezugszeichen mit um vier tiefergestellten Indizes versehen sind. Im Unterschied zu den obigen Wanddickenregelvorrichtungen ist die vorliegende rein mechanisch, das heißt statisch verstellbar. Es sind mehrere Stellelemente 77₄ über die Länge des Austrittsspalts 70 vorgesehen, die jeweils in Form eines Stellnockens gestaltet sind. Die Stellnocken 77₄ sind gegenüber dem Außenteil 62₄ gelenkig gelagert und mittels einer Stange 83 betätigbar. Die Stange 83 trägt an ihrem nockenseitigen Ende einen Gelenkkopf 86, der an einer mit dem Stellnocken 77₄ fest verbundenen Halteplatte 87 axial abgestützt ist. An seinem entgegengesetzten äußeren Ende hat die Stange 83 einen Kopf 88, der in einer Gewindehülse 89 aufgenommen und mit dieser fest verbunden ist. Die Gewindehülse 89 hat ein Außengewinde 90, mit dem sie in eine Bohrung des Außenteils 62 mit entsprechendem Innengewinde 92 eingeschraubt ist. An ihrem äußeren Ende hat die Gewindehülse 89 einen Mehrkant 93, über den Drehmoment einzuleiten ist. Durch Drehen der Gewindehülse 89 kann die Stange 83 somit axial vor oder zurückverschoben werden, so daß der Stellnocken den Austrittsspalt 70 entsprechend verjüngt oder verbreitert.

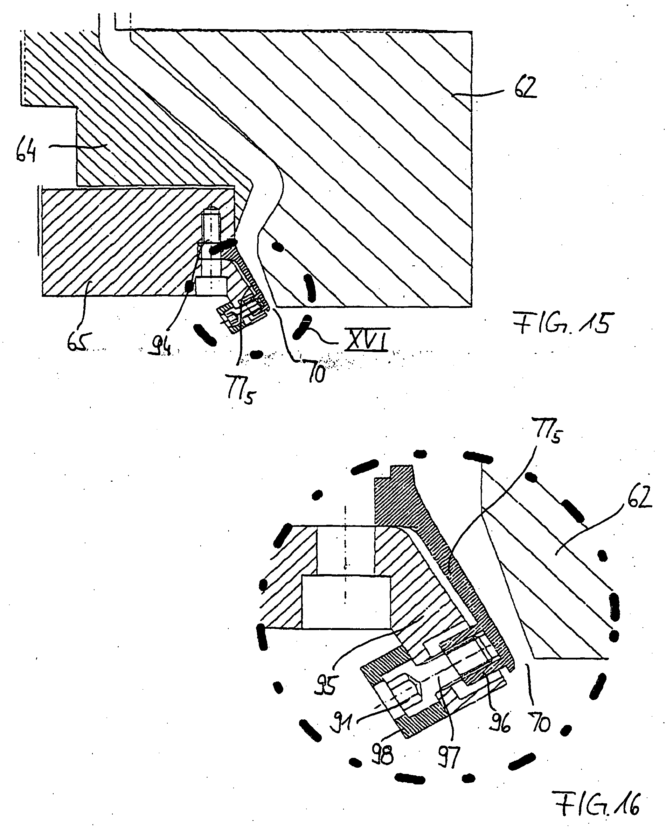

In den Figuren 15 und 16 ist eine weitere Ausführungsform einer Wanddickenregelvorrichtung 6₅ dargestellt, die an der Innenseite des Kanals angeordnet ist. Hinsichtlich der Gemeinsamkeiten zu den vorstehenden Ausführungsformen wird auf die obige Beschreibung Bezug genommen, wobei gleiche Bauteile mit gleichen und abgewandelte Bauteile mit Bezugszeichen mit um fünf tiefergestellten Indizes versehen sind. Bei der vorliegenden Ausführungsform erfolgt die Verstellung ebenfalls statisch. Das Stellelement 77₅ ist in Form einer elastischen Stellippe gestaltet, die mit dem axial beweglichen Stellkörper 65 mittels einer Schraubverbindung 94 fest verbunden ist. Die Stellippe 77₅ kann sich entweder über die gesamte Länge des Austrittsspalts 70 erstrecken oder es können mehrere Stellippen 77₅ über die Länge verteilt angeordnet sein. Es ist ersichtlich, daß der Stellkörper 65 an seiner dem Austrittsspalt 70 zugewandten Kante einen abgewinkelten Abschnitt 95 aufweist, zu dem die Stellippe 77₅ etwa parallel und mit Abstand gehalten ist. An ihrem freien Ende der Stellippe 77₅ ist eine Hülse 96 angebracht, in die eine Schraube 97 eingedreht ist, die ihrerseits gegen den abgewinkelten Abschnitt 95 in beide Richtungen axial abgestützt ist. Hierfür ist ein ringförmiges Halteelement 98 vorgesehen, das mit dem abgewinkelten Abschnitt 95 fest verbunden ist und gegen den sich der Schraubenkopf 91 abstützt. Die Schraube 97 ist als Innensechskantschraube gestaltet, so daß ein Drehmoment eingeleitet werden kann. Dadurch, daß der Schraubenkopf 91 in beide axiale Richtungen gegenüber dem Stellkörper 65 abgestützt ist, kann das freie Ende der Stellippe 77₅ sowohl nach innen als auch nach außen verstellt werden, so daß der Austrittsspalt 70 sowohl verjüngt als auch verbreitert werden kann.

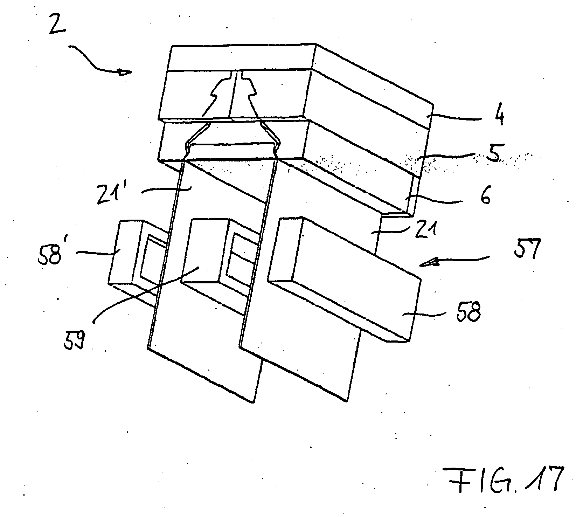

Figur 17 zeigt die erfindungsgemäße Formvorrichtung 2 mit einem nachgeschalteten Blaswerkzeug 57, welche dreiteilig aufgebaut ist und zwei Seitenrahmen 58, 58' sowie einen zwischen diesen angeordneten Zwischenrahmen 59 umfaßt. Es ist ersichtlich, daß die beiden parallel aus der Formvorrichtung 2 austretenden Vorformlinge beidseitig des Zwischenrahmens 59 und zwischen den Seitenrahmen 58, 58' entlanggeführt werden. Nach dem Zufahren der Seitenrahmen 58, 58' auf den Zwischenrahmen 59, wird Luft in den Zwischenrahmen 59 eingeblasen, so daß vorher im Zwischenrahmen 59 installierte Funktionsbauteile mit den Vorformlingen verbunden werden. Anschließend werden die Seitenrahmen 58, 58' wieder auseinandergefahren, der Zwischenrahmen wird entfernt und die Seitenrahmen 58, 58' werden geschlossen. Auf diese Weise kommen die in den Seitenrahmen 58, 58' eingeformten Halbschalen entlang des umlaufenden Randes miteinander in Kontakt und werden zu einem Hohlkörper verbunden.

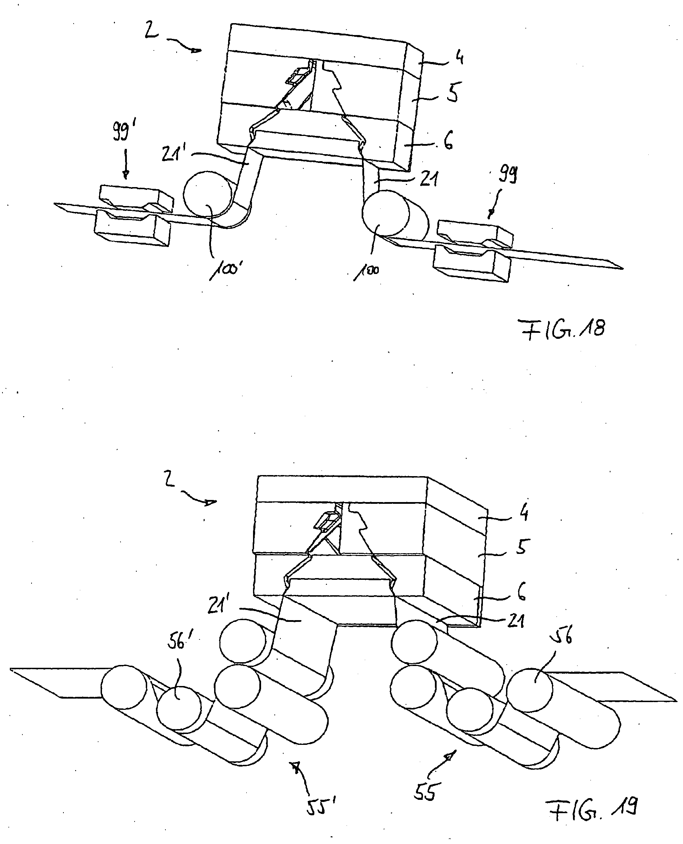

Figur 18 zeigt die erfindungsgemäße Formvorrichtung 2 mit einer nachgeschalteten Tiefziehvorrichtung 99, 99' je austretendem bandförmigen Vorformling. Die Kunststoffbänder werden zunächst an Umlenkwalzen 100, 100' umgelenkt, bevor sie der jeweiligen Tiefziehvorrichtung 99, 99' zugeführt werden.

Figur 19 zeigt die erfindungsgemäße Formvorrichtung mit einer nachgeschalteten Glättvorrichtung bzw. Kalanderwerk 55, 55' je austretendem bandförmigen Vorformling. Die Kunststoffbänder werden durch die parallel zueinander angeordneten Glättwalzen 56, 56' ausgewalzt, wobei die Dicke der Kunststoffbänder je nach Bedarf für die Weiterverarbeitung verändert wird.

Insgesamt ergibt sich durch die erfindungsgemäße Formvorrichtung unabhängig von der vorgesehenen Nachbearbeitung ein gleichmäßiger Schichtaufbau des erzeugten Vorformlings, was sich auch auf das hieraus zu herzustellende Endprodukt auswirkt.

### Bezugszeichenliste

- 2: Formvorrichtung
- 3: Extrusionskopf
- 4: Adapterelement
- 5: Formwerkzeug
- 6: Wanddickenregelvorrichtung
- 7: Gehäuse
- 8: Innenbohrung
- 9: Pinole
- 10: Außenfläche
- 11: Ringteil
- 12: Ringkanal
- 13: Ringkanal
- 14: Ringkanal
- 15: Ringöffnung
- 16: Ringteil
- 17: Innenteil
- 18: Innenteil
- 19: schalenförmiger Vorformling
- 20: bandförmiger Vorformling
- 21: austretender Vorformling
- 22: Bohrung
- 23: Außenfläche
- 24: Außenteil
- 25: Innenteil
- 26: Kanal
- 27: Eintrittsöffnung
- 28: Eintrittsöffnung
- 29: Innenfläche
- 30: Außenfläche
- 32: Vorsprung
- 33: Ausnehmung
- 34: Halbelement
- 35: Halbelement
- 38: Teilfläche
- 39: Teilfläche
- 40: Scheitelpunkt
- 42: Seite
- 43: Übergangsfläche
- 44: Übergangsfläche
- 45: Teilfläche
- 46: Teilfläche
- 47: Endfläche
- 48: Vorsprung
- 49: Schneide
- 50: Nocken
- 52: Ausnehmung
- 53: Dichtfläche
- 54: Dichtfläche
- 55: Glättvorrichtung
- 56: Glättwalze
- 57: Blaswerkzeug
- 58: Seitenrahmen
- 59: Zwischenrahmen
- 60: Kanal
- 61: Rahmen
- 62: Außenteil
- 63: Innenteil
- 64: Anschlusselement
- 65: Stellkörper
- 66: Ausnehmung
- 67: Seitenwand
- 68: Flächenabschnitt
- 69: Flächenabschnitt
- 70: Austrittsspalt
- 72: Durchbruch
- 73: Durchbruch
- 74: Zugstange
- 75: Mutter
- 76: Sicherungsring
- 77: Stellelement
- 78: Stellantrieb
- 79: Rahmenteil
- 80: Nut
- 82: Anschlussmittel
- 83: Kolbenstange
- 84: Ausnehmung
- 85: Abdeckplatte
- 86: Gelenkkopf
- 87: Halteplatte
- 88: Kopf
- 89: Gewindehülse
- 90: Außengewinde
- 91: Schraubenkopf
- 92: Innengewinde
- 93: Mehrkant
- 94: Schraubverbindung
- 95: Abschnitt
- 96: Hülse
- 97: Schraube
- 98: Halteteil
- 99: Tiefziehvorrichtung
- 100: Umlenkwalze

- A: Längsachse

## Patentansprüche

1. Formwerkzeug zur Herstellung von bandförmigen Kunststoffvorformlingen, umfassend mehrere Kanäle (26), die jeweils eine ringabschnittsförmige Eintrittsöffnung (27) und eine längliche Austrittsöffnung (28) haben, wobei die ringabschnittsförmigen Eintrittsöffnungen (27) denselben Radius aufweisen und über den Umfang verteilt angeordnet und durch radial verlaufende Schneiden (49) voneinander getrennt sind , wobei ein Adapterelement (4) vorgesehen ist, dass eine Eintrittsöffnung aufweist, die mit der ringförmigen Austrittsöffnung eines vorgeschalteten Extrusionskopfs (3) übereinstimmt, und eine mit den ringabschnittsförmigen Eintrittsöffnungen (27) des Formwerkzeugs (5) übereinstimmende Austrittsöffnung (28) aufweist, wobei ein Innenteil (25) und ein Außenteil (24) vorgesehen sind, wobei die Kanäle (26) jeweils zwischen einer Außenfläche (30) des Innenteils (25) und einer gegenüberliegenden Innenfläche (29) des Außenteils (24) gebildet sind und wobei die Innenfläche (29) des Außenteils (24) und die Außenfläche (30) des Innenteils (25) derart gestaltet sind, dass die Fließwege der Kunststoffteilchen eines Querschnitts von der Eintrittsöffnung (27) bis zur Austrittsöffnung (28) etwa gleich lang sind.

2. Formwerkzeug nach Anspruch 1, **dadurch gekennzeichnet, dass** die Schneiden (49) im Zylinderschnitt betrachtet von der Eintrittsöffnung (27) zur Austrittsöffnung (28) auseinanderlaufen.

3. Formwerkzeug nach Anspruch 1 oder 2, **dadurch gekennzeichnet, dass** die Kanäle (26) ausgangsseitig, im Querschnitt durch die Vorrichtung betrachtet, weitestgehend gerade sind.

4. Formwerkzeug nach einem der Ansprüche 2 oder 3, **dadurch gekennzeichnet, dass** zwei Kanäle (26) vorgesehen sind, wobei der Radius der ringabschnittsförmigen Eintrittsöffnungen (27) größer ist als der halbe Abstand zwischen den zwei einander gegenüberliegenden Austrittsöffnungen (28).

5. Formwerkzeug nach Anspruch 1, **dadurch gekennzeichnet, dass** die Innenfläche (29) des Außenteils (24) und die Außenfläche (30) des Innenteils (25) derart gestaltet sind, dass sich die dazwischen gebildeten Kanäle (26) in Fliessrichtung des Vorformlings verjüngen.

6. Formwerkzeug nach einem der Ansprüche 1 bis 5, **dadurch gekennzeichnet, dass** die einander gegenüberliegende Außenfläche (30) und Innenfläche (29) eines Kanals (26) jeweils zumindest eine ebene Teilfläche (38, 39) aufweisen.

7. Formwerkzeug nach einem der Ansprüche 1 bis 6, **dadurch gekennzeichnet, dass** die einander gegenüberliegende Außenfläche (3und Innenfläche (29) eines Kanals (26) zumindest zwei gewölbte Teilflächen (45, 46) aufweisen.

8. Formwerkzeug nach einem der Ansprüche 1 bis 7, **dadurch gekennzeichnet, dass** das Außenteil (24) aus zumindest zwei Halbelementen (34) zusammengesetzt ist, die nachträglich miteinander verbunden sind.

9. Formwerkzeug nach Anspruch 1, **dadurch gekennzeichnet, dass** das Innenteil (25) zumindest zwei nach außen abstehende Ansätze (48) zum Ausrichten und Verbinden mit den Halbelementen (34) des Außenteils (24) aufweist.

10. Formwerkzeug nach einem der Ansprüche 1 bis 9, **dadurch gekennzeichnet, dass** eine Wanddickenregelvorrichtung (6) zur Regelung der Dicke zumindest eines der bandförmigen Vorformlinge vorgesehen ist, die mit dem Formwerkzeug (5) verbunden ist und zumindest einen an eine der länglichen Austrittsöffnungen (28) des Formwerkzeugs (5) anschließenden Kanal aufweist, der in einen länglichen Austrittsspalt (70) mündet, wobei die Wanddickenregelvorrichtung (6) zumindest ein Stellelement (77) aufweist, das den Austrittsspalt (70) seitlich begrenzt und quer zur Strömungsrichtung des Vorformlings verstellbar ist.

11. Formwerkzeug nach Anspruch 10, **dadurch gekennzeichnet, dass** das Stellelement (77) in Form eines Stellbalkens gestaltet ist, der sich über die gesamte Länge des Austrittsspalts (70) erstreckt, wobei über dessen Länge mehrere Stellantriebe (78) zum Verstellen des Balkens quer zum Austrittspalt (70) vorgesehen sind

12. Formwerkzeug nach Anspruch 11, **dadurch gekennzeichnet, dass** der Stellbalken Endabschnitte aufweist, die in Nuten (80) eines den Austrittspalt (70) begrenzenden Rahmenteils (79) gehalten sind.

13. Formwerkzeug nach einem der Ansprüche 10 bis 12, **dadurch gekennzeichnet, dass** die Wanddickenregelvorrichtung (6) ein Innenteil (63) und ein Außenteil (62) umfasst, wobei zwischen dem Innenteil (63) und dem Außenteil (62) eine der Anzahl der länglichen Austrittsöffnungen (28) des Formwerkzeugs (5) entsprechende Anzahl von Kanälen (60) gebildet sind, wobei die Spaltbreite der Austrittsspalte (70) der Kanäle durch axiale Verstellung des Innenteils (63) relativ zum Außenteil (62) veränderbar ist.

14. Formwerkzeug nach Anspruch 1, **dadurch gekennzeichnet, dass** das Innenteil (63) einen ortsfesten Anschlusskörper (64) und einen hierin aufgenommenen und gegenüber diesem axial verstellbaren Stellkörper (65) aufweist, das die Innenflächen der Kanäle (60) im Bereich der Austrittspalte (70) bildet.

## Claims

1. A forming tool for producing band-shaped plastic preforms, comprising a plurality of channels (26) which each comprise a ring-segment-shaped entry aperture (27), as well as an oblong exit aperture (28), wherein the ring-segment-shaped entry apertures (27) each comprise the same radius relative to one another and are arranged so as to be distributed around the circumference and are separated from one another by radially extending cutters (49), wherein an adapter element (4) is provided that comprises an entry aperture, which corresponds to the annular exit aperture of an upstream extrusion head (3), and an exit aperture (28), which corresponds to the annular-segment-shaped entry apertures (27) of the forming tool (5), wherein an inner part (25) and an outer part (24) are provided, wherein the channels (26) are each formed between an outer face (30) of the inner part (25) and an opposite inner face (29) of the outer part (24), and wherein the inner face (29) of the outer part (24) and the outer face (30) of the inner part (25) are designed in such a way that the flow paths of the plastic particles of a cross-section from the entry aperture (27) to the exit aperture (28) are approximately the same length.

2. A forming tool according to claim 1, **characterized in that** the cutters (49), if viewed in the cylindrical section, diverge from the entry aperture (27) to the exit aperture (28).

3. A forming tool according to claim 1 or 2, **characterized in that** the channels (26), at the exit end, if viewed in the cross-section through the device, are substantially straight.

4. A forming tool according to claim 2 or 3, **characterized in that** there are provided two channels (26), wherein the radius of the ring-segment-shaped entry apertures (27) is greater than half the distance between the two exit apertures (28) positioned opposite one another.

5. A forming tool according to claim 1, **characterized in that** the inner face (29) of the outer part (24) and the outer face (30) of the inner part (25) are designed in such a way that the channels (26) formed therebetween are tapered in the direction of flow of the preform.

6. A forming tool according to any one of claims 1 to 5, **characterized in that** the opposed outer face (30) and inner face (29) of a channel (26) each comprise at least one planar partial face (38, 39).

7. A forming tool according to any one of claims 1 to 6, **characterized in that** the opposed outer face (3) and inner face (29) of a channel (26) comprise at least two vaulted partial faces (45, 46).

8. A forming tool according to any one of claims 1 to 7, **characterized in that** the outer part (24) is composed of at least two half-elements (34) which are subsequently connected to one another.

9. A forming tool according to claim 1, **characterized in that** the inner part (25) comprises at least two outwardly projecting projections (48) for being aligned relative to, and connected to, the half-elements (34) of the outer part (24).

10. A forming tool according to any one of claims 1 to 9, **characterized in that** there is provided a wall thickness regulating device (6) for regulating the thickness of at least one of the band-shaped preforms, which device is connected to the forming tool (5) and comprises at least one channel which follows one of the oblong exit apertures (28) of the forming tool (5) and which ends in an oblong exit gap (70), wherein the wall thickness regulating device (6) comprises at least one setting element (77) which laterally delimits the exit gap (70) and is adjustable transversely to the direction of flow of the preform.

11. A forming tool according to claim 10, **characterized in that** the setting element (77) is provided in the form of a setting beam which extends over the entire length of the exit gap (70), wherein, along the length of same, there is provided a plurality of setting drives (78) for adjusting the beam transversely to the exit gap (70).

12. A forming tool according to claim 11, **characterized in that** the setting beam comprises end portions which are held in grooves (80) of a frame part (79) delimiting the exit gap (70).

13. A forming tool according to any one of claims 10 to 12, **characterized in that** the wall thickness regulating device (6) comprises an inner part (63) and an outer part (62), wherein, between the inner part (63) and the outer part (62), there is formed a number of channels (60) corresponding to the number of oblong exit apertures (28) of the forming tool (5), wherein the gap width of the exit gaps (70) of the channels is variable by axially adjusting the inner part (63) relative to the outer part (62).

14. A forming tool according to claim 1, **characterized in that** the inner part (63) comprises a fixed attaching member (64) and a setting member (65) which is received in the latter and is axially adjustable relative to the latter, and which inner part forms the inner faces of the channels (60) in the region of the exit gaps (70).

## Revendications

1. Outil de formage destiné à la fabrication de préformes en matière plastique en forme de bande, comprenant plusieurs canaux (26), lesquels comportent respectivement une ouverture d'entrée (27) en forme de section annulaire et une ouverture de sortie (28) allongée, dans lequel les ouvertures d'entrée (27) en forme de section annulaire présentent le même rayon et sont réparties sur la circonférence et séparées les unes des autres par des découpes (49) s'étendant radialement, dans lequel un élément adaptateur (4) est fourni, lequel comporte une ouverture d'entrée, laquelle correspond à l'ouverture de sortie annulaire d'une tête d'extrusion (3) amont, et laquelle comporte une ouverture de sortie (28) correspondant aux ouvertures d'entrée (27) en forme de section annulaire de l'outil de formage (5), dans lequel une partie interne (25) et une partie externe (24) sont fournies, dans lequel les canaux (26) sont respectivement formés entre une surface externe (30) de la partie interne (25) et une surface interne (29) opposée de la partie externe (24) et dans lequel la surface interne (29) de la partie externe (24) et la surface externe (30) de la partie interne (25) sont conçues de telle sorte que les trajets d'écoulement des particules de matière plastique d'une section transversale de l'ouverture d'entrée (27) à l'ouverture de sortie (28) sont approximativement de même longueur.

2. Outil de formage selon la revendication 1, **caractérisé en ce que** les découpes (49), vues en coupe cylindrique, divergent de l'ouverture d'entrée (27) à l'ouverture de sortie (28).

3. Outil de formage selon la revendication 1 ou 2, **caractérisé en ce que** les canaux (26) côté sortie, vus en coupe transversale à travers le dispositif, sont largement droits.

4. Outil de formage selon l'une des revendications 2 ou 3, **caractérisé en ce que** deux canaux (26) sont fournis, dans lequel le rayon des ouvertures d'entrée (27) en forme de section annulaire est supérieur à la moitié de la distance entre les deux ouvertures de sortie (28) opposées l'une à l'autre.

5. Outil de formage selon la revendication 1, **caractérisé en ce que** la surface interne (29) de la partie externe (24) et la surface externe (30) de la partie interne (25) sont conçues de telle sorte que les canaux (26) formés entre elles se rétrécissent dans le sens d'écoulement de la préforme.

6. Outil de formage selon l'une quelconque des revendications 1 à 5, **caractérisé en ce que** la surface externe (30) et la surface interne (29) opposées l'une à l'autre d'un canal (26) comportent respectivement au moins une surface partielle (38, 39) plane.

7. Outil de formage selon l'une quelconque des revendications 1 à 6, **caractérisé en ce que** la surface externe (30) et la surface interne (29) opposées l'une à l'autre d'un canal (26) comportent au moins deux surfaces partielles (45, 46) courbées.

8. Outil de formage selon l'une quelconque des revendications 1 à 7, **caractérisé en ce que** la partie externe (24) est composée d'au moins deux demi-éléments (34), lesquels sont ensuite reliés l'un à l'autre.

9. Outil de formage selon la revendication 1, **caractérisé en ce que** la partie interne (25) comporte au moins deux appendices (48) faisant saillie vers l'extérieur pour l'alignement et la liaison avec les demi-éléments (34) de la partie externe (24).

10. Outil de formage selon l'une quelconque des revendications 1 à 9, **caractérisé en ce qu'**un dispositif de régulation de l'épaisseur de paroi (6) est fourni pour réguler l'épaisseur d'au moins l'une des préformes en forme de bande, lequel est relié à l'outil de formage (5) et comporte au moins un canal se reliant à l'une des ouvertures de sortie (28) allongées de l'outil de formage (5) et débouchant dans une fente de sortie (70) allongée, dans lequel le dispositif de régulation de l'épaisseur de paroi (6) comporte au moins un élément de réglage (77), lequel délimite latéralement la fente de sortie (70) et est réglable transversalement au sens d'écoulement de la préforme.

11. Outil de formage selon la revendication 10, **caractérisé en ce que** l'élément de réglage (77) est conçu sous la forme d'une poutre de réglage, laquelle s'étend sur toute la longueur de la fente de sortie (70), dans lequel plusieurs entraînements de réglage (78) permettant de régler la poutre transversalement à la fente de sortie sont fournis sur sa longueur (70).

12. Outil de formage selon la revendication 11, **caractérisé en ce que** la poutre de réglage comporte des sections d'extrémité, lesquelles sont maintenues dans des rainures (80) d'une partie de cadre (79) délimitant la fente de sortie (70).

13. Outil de formage selon l'une quelconque des revendications 10 à 12, **caractérisé en ce que** le dispositif de régulation de l'épaisseur de paroi (6) comprend une partie interne (63) et une partie externe (62), dans lequel un nombre de canaux (60) correspondant au nombre d'ouvertures de sortie (28) allongées de l'outil de formage (5) sont formés entre la partie interne (63) et la partie externe (62), dans lequel la largeur de fente des fentes de sortie (70) des canaux peut être modifiée par réglage axial de la partie interne (63) par rapport à la partie externe (62).

14. Outil de formage selon la revendication 1, **caractérisé en ce que** la partie interne (63) comporte un corps de liaison (64) fixe et un corps de réglage (65) logé dans celui-ci et réglable axialement par rapport à celui-ci et lequel forme les surfaces internes des canaux (60) dans la zone de la fente de sortie (70).
